Europäisches Patentamt

(19) European Patent Office

Office européen des brevets

(11) Veröffentlichungsnummer: **0 052 810**
**B1**

(12) **EUROPÄISCHE PATENTSCHRIFT**

(45) Veröffentlichungstag der Patentschrift:
30.11.83

(51) Int. Cl.³: **B 01 D 25/12,** B 01 D 25/32

(21) Anmeldenummer: **81109382.2**

(22) Anmeldetag: **30.10.81**

(54) **Plattenfilterpresse mit einem Reinigungswagen.**

(30) Priorität: **20.11.80 DE 3043821**

(43) Veröffentlichungstag der Anmeldung:
**02.06.82 Patentblatt 82/22**

(45) Bekanntmachung des Hinweises auf die Patenterteilung:
**30.11.83 Patentblatt 83/48**

(84) Benannte Vertragsstaaten:
**CH DE FR GB IT LI**

(56) Entgegenhaltungen:
**DE - A - 1 536 788**
**DE - A - 2 627 579**
**DE - A - 2 822 202**
**DE - A - 2 847 734**

(73) Patentinhaber: **Passavant-Werke AG & Co. KG,
D-6209 Aarbergen 7 (DE)**

(84) Benannte Vertragsstaaten: **CH DE FR IT LI**

(73) Patentinhaber: **U. Passavant AG Michelbacher Hütte,
D-6209 Aarbergen 7 (DE)**

(84) Benannte Vertragsstaaten: **GB**

(72) Erfinder: **Busse, Oswald, Dr., Schillerstrasse 8,
D-6209 Aarbergen 2 (DE)**
Erfinder: **Klesper, Hugo, Auf dem Kirchgarten,
D-6209 Aarbergen 2 (DE)**

(74) Vertreter: **Glawe, Richard, Dr. et al, Patentanwälte Dr.
Richard Glawe Dr. Walter Moll, Dipl.-Ing. Klaus Delfs Dr.
Ulrich Mengdehl Dr. Heinrich Niebuhr Postfach 260 162,
D-8000 München 26 (DE)**

## Plattenfilterpresse mit einem Reinigungswagen

Die Erfindung betrifft eine Plattenfilterpresse mit einem in Bewegungsrichtung der verschieblichen Filterplatten verfahrbaren Reinigungswagen, der einen Antrieb und einen mit den Filterplatten in Eingriff bringbaren Mitnehmer aufweist.

Bei Plattenfilterpressen sammelt sich in der Filterkammer zwischen je zwei Platten Filterkuchen, der nach dem Öffnen der Platten abgeworfen wird. Die Filtertücher, mit denen die Filterplatten überzogen sind, setzen sich jedoch im Laufe der Zeit zu, so daß ihre Durchlässigkeit stark vermindert und die Filterleistung erheblich verringert wird. Die Tücher müssen daher in größeren Zeitabständen gereinigt werden.

Es ist üblich, hierzu sogenannte Spritzrohre zu verwenden, die mit gegen die Filterfläche gerichteten Düsen versehen sind. Diese Spritzrohre werden mit Druckwasser versorgt und je nach Anordnung horizontal oder vertikal an der zu reinigenden Fläche entlang bewegt. Ihre Führung und ihr Antrieb befinden sich an dem Reinigungswagen. Es gibt verschiedene Reinigungsarten. Wenn nur jeweils ein Zwischenraum zwischen zwei Platten zur Verfügung steht, dann wird man mit zwei gegengerichteten Düsenreihen die beiden Flächen reinigen. Ist jede Platte von beiden Seiten zugänglich, dann verwendet man zwei Spritzrohre, die gleichzeitig beide Platten abreinigen.

Bei einer bekannten Vorrichtung dieser Art (DE-A-2 822 202) muß der Reinigungswagen eine Fahrbewegung durchführen, um die Filterplatten nacheinander gegen das geöffnete Druckstück bzw. die dort bereits befindlichen Filterplatten zu verschieben. Anschließend kehrt er in seine Reinigungsposition oberhalb der nächstfolgenden Filterplatte zurück. Der Reinigungswagen benötigt also einen umkehrbaren Antrieb. Auch ist die Steuerung zur Durchführung der oszillierenden Fahrbewegungen kompliziert.

Der Erfindung liegt dementsprechend die Aufgabe zugrunde, die eingangs genannte Vorrichtung derart weiterzuentwickeln, daß sich der Reinigungswagen und insbesondere dessen Bewegungssteuerung vereinfacht.

Zur Lösung dieser Aufgabe ist die Plattenfilterpresse nach der Erfindung dadurch gekennzeichnet, daß der Reinigungswagen mit einer lösbaren Bremse versehen ist und daß der Mitnehmer vom Antrieb in Bewegungsrichtung der Filterplatten ausschiebbar ist.

Wenn ein Reinigungsvorgang beendet ist, schiebt der von seiner Bremse festgehaltene Reinigungswagen den Mitnehmer aus und bewegt dadurch die zumindest auf der Vorderfläche gereinigte Filterplatte gegen das geöffnete Druckstück bzw. die dort bereits befindlichen Filterplatten. Sodann wird die Bremse gelöst und der Mitnehmer ein weiteres Stück ausgeschoben. Der Reinigungswagen stößt sich dadurch an der gerade verschobenen Filterplatte ab und gelangt in seine nächste Reinigungsposition. Die Filterplatten können durch Ketten oder sonstige Distanzelemente miteinander verbunden sein, so daß das Verschieben der jeweils gereinigten Filterplatte die nächstfolgende Filterplatte in die Reinigungsposition bringt. Wenn der Reinigungswagen seine nächste Reinigungsstellung erreicht hat, wird er von seiner Bremse festgelegt. Der Mitnehmer kann nun eingezogen werden, um an derjenigen Filterplatte anzugreifen, die gerade gereinigt wird. Nach Beendigung des Reinigungsvorgangs wiederholt sich der beschriebene Arbeitszyklus.

Der erfindungsgemäße Reinigungswagen benötigt keinen endlos umlaufenden, umsteuerbaren Antrieb, sondern lediglich einen kurzhubigen, oszillierenden Antrieb. Dieser Antrieb verschiebt schrittweise erst eine Filterplatte und sodann in entgegengesetzter Richtung den Reinigungswagen. Dieser Bewegungsablauf läßt sich sehr einfach steuern und automatisieren. Der Reinigungswagen kann somit auch die Platten beim normalen Öffnen mit Kuchenabwurf verschieben. Er ersetzt den Plattenantrieb.

Grundsätzlich kann der Antrieb beliebig ausgebildet sein. Nach einem ganz besonders vorteilhaften Merkmal hingegen ist die Plattenfilterpresse gekennzeichnet durch eine den Antrieb und den Mitnehmer bildende Kolbenzylindereinheit. Dadurch ergibt sich eine sehr einfache und problemlos in Abhängigkeit vom Hub der Kolbenzylindereinheit steuerbare Konstruktion.

Vorzugsweise ist die Kolbenzylindereinheit schwenkbar am Reinigungswagen befestigt. Dadurch kann sie vor ihrem Eingriff die jeweils als nächste zu verschiebende Filterplatte überlaufen. Ausweichende Vorsprünge oder sonstige konstruktive Änderungen der Filterplatten werden nicht erforderlich.

Die Bremse kann erfindungsgemäß in Abhängigkeit vom Hub des Mitnehmers lösbar sein. Alternativ dazu besteht nach der Erfindung die Möglichkeit, daß die Bremse in Abhängigkeit von der Betätigungskraft des Mitnehmers bzw. dem Verschiebewiderstand der Filterplatten lösbar ist. In beiden Fällen ergibt sich eine einfache Automatisierung des Arbeitsablaufes.

Vorteilhafterweise ist der Hub des Mitnehmers verstellbar, um eine Anpassung an unterschiedlich dicke Filterplatten zu ermöglichen.

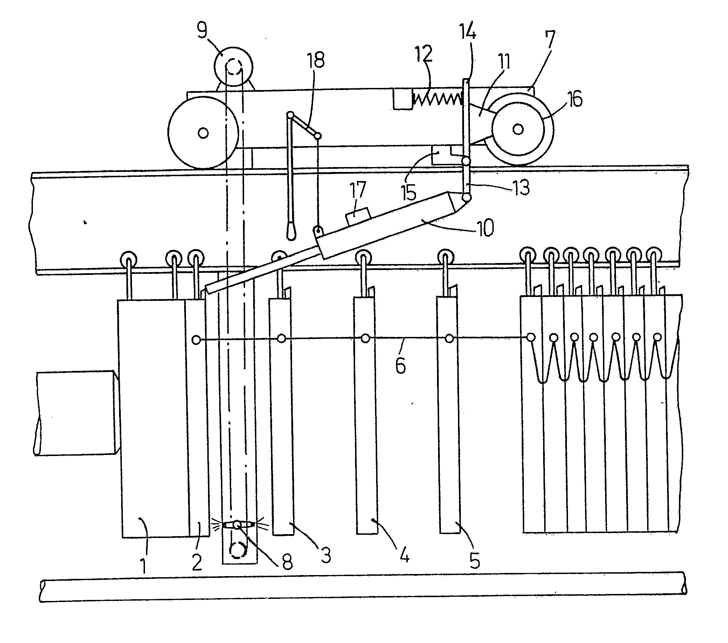

Die Erfindung wird im folgenden anhand eines bevorzugten Ausführungsbeispiels im Zusammenhang mit der beiliegenden Zeichnung näher erläutert. Die Figur zeigt eine schematische Seitenansicht einer Plattenfilterpresse.

Die Plattenfilterpresse umfaßt ein lösbares Druckstück 1 sowie eine Vielzahl von Filterplatten, von denen die ersten vier mit 2, 3, 4 und 5 nummeriert sind. Die Filterplatten sind über Ketten 6 oder sonstige Distanzelemente miteinander verbunden, so daß dann, wenn eine der Filterplatten am geöffneten Druckstück 1 bzw. an den dort bereits befindlichen Filterplatten zur Anlage kommt, die nächstfolgende Filterplatte, im vorliegenden Fall die Filterplatte 3, ihre Reinigungsposition erreicht hat und die nächsten beiden Filterplatten 4 und 5 vom Plattenstapel gezogen worden sind.

Oberhalb der Filterplatten ist ein Reinigungswagen 7 in Bewegungsrichtung der Filterplatten verfahrbar. Der Reinigungswagen 7 trägt eine Reinigungsvorrichtung 8 in Form eines Spritzrohres, die von einem Motor 9 über eine Kette auf und ab bewegbar ist.

Ferner trägt der Reinigungswagen 7 eine Kolbenzylindereinheit 10, die einen Antrieb sowie einen Filterplatten-Mitnehmer bildet. Die Kolbenzylindereinheit ist schwenkbar an dem einen Arm 13 eines zweiarmigen Hebels 13, 14 befestigt, welcher seinerseits gelenkig über eine Konsole 15 am Reinigungswagen gelagert ist. Der andere Arm 14 trägt eine Bremsbacke 11, die sich unter der Wirkung einer Druckfeder 12 gegen eine Bremstrommel 16 legt. In der gezeigten Position hat die Kolbenzylindereinheit 10 gerade den Reinigungswagen 7 in seine Reinigungsstellung oberhalb des Zwischenraums zwischen den Filterplatten 2 und 3 gebracht. Der Reinigungswagen 7 wird hier von der Bremse 11, 16 festgehalten. Die Kolbenstange der Kolbenzylindereinheit 10 kann nun eingezogen werden, wobei sie die Filterplatte 3 überläuft und mit dieser in Eingriff gelangt.

Nach Beendigung des Reinigungsvorgangs wird die Kolbenstange wieder ausgeschoben, wobei sie die Filterplatte 3 zur Anlage an der Filterplatte 2 bringt. Anschließend setzt sich der Ausschiebehub der Kolbenstange fort. Sie überwindet dabei die Kraft der Druckfeder 12. Die Bremse wird also gelöst, und der Reinigungswagen 7 bewegt sich um eine Filterplattenbreite vom Druckstück 1 fort. Er gelangt in seine nächste Reinigungsposition bezüglich des Zwischenraums zwischen den Filterplatten 3 und 4, in der er durch Abschalten der Kolbenzylindereinheit mittels eines berührungslosen Endschalters 17 angehalten wird. Die Bremse 11, 16 rastet wieder ein, und der beschriebene Arbeitszyklus kann von vorne beginnen.

Um den ersten Reinigungsvorgang einzuleiten, löst man beispielsweise manuell die Bremse 11, 16. hebt die Kolbenzylindereinheit 10 mittels eines Hebelzuges 18 hoch und schiebt den Reinigungswagen 7 in seine entsprechende Stellung nahe dem Druckstück 1. Der weitere Arbeitsvorgang läuft nach Absenken der Kolbenzylindereinheit automatisch ab. Wenn alle Platten gereinigt sind, wird der Wagen von Hand in die Ausgangsstellung geschoben.

**Patentansprüche**

1. Plattenfilterpresse mit einem in Bewegungsrichtung der verschieblichen Filterplatten verfahrbaren Reinigungswagen, der einen Antrieb und einen mit den Filterplatten in Eingriff bringbaren Mitnehmer aufweist, dadurch gekennzeichnet, daß der Reinigungswagen (7) mit einer lösbaren Bremse (11, 16) versehen ist und daß der Mitnehmer vom Antrieb in Bewegungsrichtung der Filterplatten (2—5) ausschiebbar ist.

2. Plattenfilterpresse nach Anspruch 1, gekennzeichnet durch eine den Antrieb und den Mitnehmer bildende Kolbenzylindereinheit (10).

3. Plattenfilterpresse nach Anspruch 2, dadurch gekennzeichnet, daß die Kolbenzylindereinheit (10) schwenkbar am Reinigungswagen (7) befestigt ist.

4. Plattenfilterpresse nach einem der Ansprüche 1 bis 3, dadurch gekennzeichnet, daß die Bremse (11, 16) in Abhängigkeit vom Hub des Mitnehmers lösbar ist.

5. Plattenfilterpresse nach einem der Ansprüche 1 bis 3, dadurch gekennzeichnet, daß die Bremse (11, 16) in Abhängigkeit von der Betätigungskraft des Mitnehmers bzw. dem Verschiebewiderstand der Filterplatten (2—5) lösbar ist.

6. Plattenfilterpresse nach einem der Ansprüche 1 bis 5, dadurch gekennzeichnet, daß der Hub des Mitnehmers verstellbar ist.

**Claims**

1. Plate filter press with a cleaning carriage which can travel in the direction of motion of the displaceable filter plates, which cleaning carriage has drive means and an entrainment member which can be brought into engagement with the filter plates, characterised in that the cleaning carriage (7) is provided with a releasable brake (11, 16) and that the entrainment member can be extended from the drive means in the direction of movement of the filter plates (2—5).

2. Plate filter press according to Claim 1, characterised by a piston-cylinder unit (10) forming the drive means and the entrainment member.

3. Plate filter press according to Claim 2, characterised in that the piston-cylinder unit (10) is pivotally secured to the cleaning carriage (7).

4. Plate filter press according to one of Claims 1 to 3, characterised in that the brake (11, 16) is releasable depending on the travel of the entrainment member.

5. Plate filter press according to one of Claims 1 to 3, characterised in that the brake (11, 16) is releasable depending on the operating force of the entrainment member or on the displacement resistance of the filter plates (2—5).

6. Plate filter press according to one of Claims 1 to 5, characterised in that the travel of the entrainment member is adjustable.

**Revendications**

1. Filtre-presse à plaques, équipé d'un chariot de nettoyage qui est déplaçable dans la direction de mouvement des plaques de filtration mobiles en translation et qui comporte un mécanisme de commande et un organe d'entraînement susceptible d'être mis en prise avec les plaques de filtration, caractérisé en ce que le chariot de nettoyage (7) est équipé d'un frein desserrable (11, 16) et en ce que l'organe d'entraînement peut être placé en position d'extension, à partir du mécanisme de commande, dans la direction de mouvement des plaques de filtration (2 à 5).

2. Filtre-presse à plaques selon la revendication 1, caractérisé par un ensemble cylindre-piston (10) qui constitue le mécanisme de commande et l'organe d'entraînement.

3. Filtre-presse à plaques selon la revendication 2, caractérisé en ce que l'ensemble cylindre-piston (10) est fixé sur le chariot de nettoyage (7) de manière à pouvoir pivoter.

4. Filtre-presse à plaques selon l'une quelconque des revendications 1 à 3, caractérisé en ce que le frein (11, 16) peut être desserré sous la dépendance de la course de l'organe d'entraînement.

5. Filtre-presse à plaques selon l'une quelconque des revendications 1 à 3, caractérisé en ce que le frein (11, 16) peut être desserré sous la dépendance de la force d'actionnement de l'organe d'entraînement ou de la résistance au déplacement des plaques de filtration.

6. Filtre-presse à plaques selon l'une quelconque des revendications 1 à 5, caractérisé en ce que la course de l'organe d'entraînement est réglable.